# EUROPÄISCHE PATENTSCHRIFT

(11) **EP 0 351 423 B1**
(45) Veröffentlichungstag und Bekanntmachung des Hinweises auf die Patenterteilung: **11.08.1993**
(21) Anmeldenummer: 88909715.0
(22) Anmeldetag: 18.11.1988
(51) Int. Cl.: A23L 1/16, A21C 1/00

(54) **VERFAHREN UND ANLAGE ZUR HERSTELLUNG VON TEIG INSBESONDERE FÜR TEIGWAREN**
PROCESS AND INSTALLATION FOR MAKING DOUGH, IN PARTICULAR FOR PASTA
PROCEDE ET INSTALLATION POUR LA FABRICATION DE PATE ET NOTAMMENT DE PATES ALIMENTAIRES

(30) Priorität: 27.11.1987 CH 4627/87
(43) Veröffentlichungstag der Anmeldung: 24.01.1990
(73) Patentinhaber: BÜHLER AG, 9240 Uzwil (CH)
(72) Erfinder: MANSER, Josef, CH-9240 Uzwil (CH); EGGER, Friedrich, CH-9244 Niederuzwil (CH); SEILER, Werner, CH-9523 Züberwangen (CH)
(74) Vertreter: Manitz, Gerhart, Dipl.-Phys. Dr.
(86) Internationale Anmeldenummer: CH8800219
(87) Internationale Veröffentlichungsnummer: WO8904610

(56) Entgegenhaltungen:
- EP-A- 0 129 892
- US-A- 4 269 582
- US-A- 4 744 669

## Beschreibung

### Technisches Gebiet

Die Erfindung betrifft ein Verfahren sowie eine Anlage zur Herstellung von Teig, insbesondere für Teigwaren, aus stärke- und kleberproteinhaltigen Rohmaterialien wie Mehl, Dunst oder Griess mittels Befeuchten, Mischen und Kneten, derart, dass das Gut eine Temperatur von 50°C zumindest nicht wesentlich übersteigt, und im Teig ein Klebergerüst voll ausgebildet wird.

### Stand der Technik

Ein grösserer Teil der für die menschliche Nahrung bestimmten Körnerfrüchte wird in der traditionellen Verarbeitung in gemahlenem Zustand als Mehl, Dunst oder Griess zuerst in eine Teigform und erst dann in Teigwaren (zum Garkochen in Wasser) verarbeitet. Kennzeichnend für diese Produktgruppe ist das sogenannte Kleber - bzw. Proteingerüst, das in der Teigbildungsphase ausgebildet werden muss, um für die anschliessende Verarbeitung, sowie den fertigen Produkten die notwendige Festigkeit zu geben.

Sehr beliebt ist ferner eine Vielfalt an Spezialprodukten, die ebenfalls von der Teigform ausgehend, z.B. geröstet, gepufft oder fritiert und auf diese Weise verzehrfertig bereitet werden können. Bei dieser Kategorie von Spezialprodukten ist es möglich, auch kleberfreie bzw. kleberschwache Rohmaterialien, wie Mais, Reis, oder Kartoffeln usw. zu verwenden. Hier nützt man anstelle der Klebergerüste, z.B. die Eigenschaften der thermisch behandelten Stärke für den Zusammenhalt der Fertigprodukte aus. Auch hier wird aber in der Teigphase eine Temperatur wesentlich unter 100°C, also kein Kochprozess, angewendet.

Gemeinsam ist beiden Produktgruppen, insbesondere gewonnen aus Körnerfrüchten, dass man sie für den menschlichen Verzehr vorgängig irgend einer Wärmebehandlung unterzieht, so dass speziell die natürliche Stärke aufgeschlossen und sie dadurch über die Verdauung möglichst vollständig verwertbar ist.

Ein Getreidekorn weist im natürlichen, ganzen Zustand eine zellförmige Struktur auf. Diese besteht, soweit es den Mehlkörper betrifft, zur Hauptsache (70-75% TS) aus Stärke in kristalliner Form und aus (10-15% TS) Protein, wobei das Protein in verschiedenen Arten besteht, die teils an den Stärkekristallen angelagert, teils zwischen den einzelnen Stärkekörnern zwischengelagert sind, und 10-15% Wasser. Im mikroskopischen Schnitt, durch ein naturbelassenes Getreidekorn, erkennt man mit speziell dafür verwendeten Färbemethoden sehr deutlich das Protein- bzw. Klebergerüst, das dem ganzen Korn zu seiner hohen Festigkeit verhilft. Während dem Mahlprozess werden von den, einige Milimeter grossen Getreidekörnern die dunklen Schalenteile entfernt und je nach Erfordernis der Mehlkörper in bestimmte Granulationen von 0-500 µ hergestellt. Entsprechend werden dabei die natürlicherweise vorhandenen Bindungen zwischen den Mehl- bzw. Griessteilchen zerstört.

Von einer klassischen Teigware wie Spaghetti, Makaroni, Nudeln usw. erwartet der Kunde, dass sie in 7-15 Minuten im Wasser gargekocht ist, ohne dass ein grosser Teil der Stärke in das Kochwasser übergeht und mit diesem weggeschüttet wird. Verhindern kann man dies, indem während der industriellen Verarbeitung wenig Stärkekörner in ihrer äusseren Umhüllung beschädigt werden und insbesondere aber auch dadurch, dass in der Teigware während der Teigbildung ein gutes Proteingerüst ausgebildet wird bzw. ein grosser Teil der Eiweisskörper netzförmige Bindungen eingehen und die Stärkekörner einschliessen. Damit aber das geforderte Klebergerüst hergestellt werden kann, muss dafür gesorgt werden, dass die noch verbliebenen natürlichen Bindungen nicht zerstört bzw. geschädigt werden, und an allen Kontaktstellen der Mehl-oder Griessteile über die Teigverarbeitung neue Bindungen hergestellt werden. Dieses Erfordernis gibt der ganzen Teigbildung für Teigwaren das bestimmte Gepräge. Bis heute gibt es für die Teigwarenteigherstellung zwei weitgehend anerkannte Modellvorstellungen. Die eine ist mehr die apparative Verwirklichung. In einem Mischtrog von mehreren 100, gegebenenfalls sogar 1000-2000 Litern Inhalt werden Griess und Wasser und je nach Produkt weitere Zugaben eingeschüttet. Das Gut wird während 10-15 Minuten mit einer Paddelwelle bewegt und gemischt, so dass das Wasser sowie die anderen Zugaben über die ganze Produktmenge gleichmässig verteilt werden und die einzelnen Mehl- bzw. Griessteile genügend Zeit erhalten, um das Wasser auch wirklich aufzunehmen, und damit es in die Einzelpartikel eindringen kann. Die gleichmässige Verteilung sowie die Wasseraufnahme macht also die genannte Verweilzeit von 10-15 Minuten in einem Mischtrog zwingend erforderlich. Aus dem Mischtrog wird durch Uebertragelemente bereits befeuchtetes Produkt entnommen und über eine Transportschnecke in eine Press- und Knetschnecke geführt, welche nun mit der Teigbildung das Klebergerüst und gleichzeitig einen hohen Druck von 70-100 bar für die Formverpressung aufbauen soll. Alle Erfahrung hat bestätigt, dass für die Bildung eines guten Klebergerüstes die Temperatur der Ware zu keinem Zeitpunkt der Teigbildung 50°C übersteigen darf, wobei einwandfreie Rohmaterialien Voraussetzung sind.

Beim zweiten, mehr wissenschaftlichen Modell, stellt man sich den Aufbau des Klebergerüstes als Ergebnis der Bearbeitung des Teiges unter verhältnismässig hohen Drücken in der Pressschnecke teils als bio-chemischen, Prozess vor, da unter lebenden Eiweisskörpern Bindungen entstehen, und teils aber auch als mechanischen Zwangsbewegungsvorgang vor, um durch räumliche Verschiebungen aller Partikel günstige Lagen der Eiweisskörper für neue Bindungen zu schaffen. Der bio-chemische Vorgang ist abhängig von der Temperatur und dem zur-Verfügungstellen von genügend Wasser. Teilweise ist es bis heute umstritten, welche spezifischen Proteinarten, insbesondere für die neuen Bindungen zur Hauptsache aktiv sind. Das Klebereiweiss besteht bereits im natürlichen Korn aus fadenförmigen Molekülgebilden, die dank einer grossen Anzahl Bindungen dem ganzen Korn seine mechanische Festigkeit geben.Ein Teil dieser Bindungen wird aber durch den Mahlprozess bzw. die Herstellung von Mehl und Griesspartikel zerstört. Werden nun dem trockenen Rohmaterial bestehend aus Mehl, Griess oder Dunst usw. mit einem Wassergehalt von 10-15% weitere 10-20% Wasser dazugegeben, die Masse einem mechanischen Druck- Verformprozess unterworfen, so werden die fadenförmigen Eiweissmoleküle gestreckt und gleichzeitig über Schwefel- und Wasserstoff-Gruppen, die teils an den Eiweissmolekülen angelagert sind, neue Bindungen hergestellt. Je mehr es nun möglich ist, die neuen Bindungen speziell über die Schwefelgruppen möglichst vollkommen herzustellen, umso mehr kann die dem ursprünglichen Korn eigene Festigkeit, dem neu zusammengesetzten Teigstück, z.B. als Teigware über seinen ganzen Querschnitt, wiedergegeben werden. Anstelle der durch den Mahlprozess zerstörten natürlichen Bindungen werden aber nicht nur neue hergestellt, sondern diese auch in eine andere für die mechanische Verarbeitung (Verpressung) und spätere thermische Behandlung (Kochen) mehr geeignete, bildlich als räumliches Gummibandgewebe vorstellbare Form, gebracht. Dies erst gibt dem Teig die ihm eigene typische, elastische und plastische und nicht- klebrige Eigenschaft. Wird versucht, einen Teig mit nur 20% totalem Wassergehalt herzustellen, so kann in Ermangelung von genügend Wassermolekülen unabhängig der Knetintensität nur ein unvollständiges Klebergerüst aufgebaut werden. Die daraus hergestellten Teigwaren können beim Kochen in kurzer Zeit einen Teigklumpen bilden, und lassen sich in dieser Form nur noch schlecht als übliche Teigwarenspeisen herrichten. Zudem geht bei Ware mit ungenügendem Proteingerüst viel zu viel Stärke von der Warenoberfläche als Verlust in das Kochwasser und die Teigware wird an der Oberfläche schleimig und klebrig.

In den vergangenen Jahrzehnten sind sehr viele Versuche unternommen worden, gerade für Teigwaren eine einfachere Teigführung zu entwickeln. Der Teigwarenteig kann im Gegensatz zu dem klassischen Brotteig als Trockenteig bezeichnet werden, mit einer durchschnittlichen Teigfeuchtigkeit von 28-35%. Nach der Verpressung muss das überschussige Wasser (die 12-13% übersteigende Wassermenge) durch einen Trockenprozess wieder entfernt werden, damit das Produkt lagerfähig wird. Brotteig hat eine durchschnittlichen Wassergehalt von 50-65%. Ein grosser Teil dieses Wassers wird beim Backen verdampft. Im Brot bleibt aber doch ein hoher Prozentsatz an Wasser, weshalb traditionelles Brot in geschlossener Verpackung bei Raumtemperatur nur wenige Tage haltbar ist. Brotteig mit einem Wassergehalt von 50-65% wird hier als Nassteig bezeichnet. Es ist selbst eine Erfahrung aus der Kochschulzeit, dass die Knetung des Brotteiges wegen dem hohen Wassergehalt einfacher, besonders mit weniger Kraft (Energie) erfolgen kann.

Das Uebernehmen der "leichteren" Teigbildung des Nassteiges für Teigwaren wäre wirtschaftlich unsinnig, da alles zusätzliche Wasser oberhalb des für die Bildung des Klebergerüstes sowie die Formgebung benötigten Wassers ebenfalls durch den energie-aufwendigen thermischen Trockenprozess wieder verdampft werden müsste. Alle bisherigen Versuche, für Teigwaren ein kürzeres, einfacheres Teigherstellverfahren einzusetzen, scheiterten, zumindest soweit es der Anmelderin bekannt ist, ausnahmslos, sei es an der technischen Nichtbeherrschbarkeit oder an nicht akzeptablen Einbussen der Endproduktqualität. Auch dürfte es aufgrund bio-chemischer und physikalischer Gegebenheiten nicht moglich sein, ein nach der Verpressung ungenügend ausgebildetes oder geschädigtes Klebergerüst durch irgendwelche Einflüsse wieder zu "reparieren". Hat das Produkt zudem Hitzeschäden, das heisst, die Temperatur der Ware stieg während der Teigbildung wesentlich über 50°C, so ist es auch nicht mehr möglich, dieselbe Ware nochmals über die Teigstufe zu führen und nochmals zu verpressen. Deshalb ist Paniermehl, hergestellt aus schon gebackenem Brot ungeeignet, um nochmals als Brotbackmehl oder Rohmaterial für Teigwaren zu verwenden. Bei der Teigbildung wie für Teigwaren muß auf die Biologie Rücksicht genommen werden. Dies bedeutet, daß hohe Anforderungen sowohl an die Rohmaterialien wie auch an den Betrieb der Anlagen gestellt werden, damit keine Infektionsquellen für schädliche Mikroorganismen erhalten, bzw. diese noch vermehrt werden. Besonder hohe Ansprüche sind bei der Teigwarenherstellung dort gefordert, wo den Teigwaren Ei zugegeben wird. Der kritische Punkt in dieser Beziehung war bis heute der Trogmischer, bedingt durch die teils unkontrollierte Verweilzeit des Gutes in dem recht feuchten, auch für störende Mikroorganismen optimalen Klima. An den Trogmischer werden deshalb bezüglich der Hygiene die höchsten Ansprüchen gestellt. Die häufige Reinigung istbesonders zeitaufwendig. Bei Verwendung von chemischen Reinigungsmitteln wird der Reinigungsprozess lediglich verlagert in die Reinigung von Waschwasser. In jedem Fall ergeben sich daraus erhöhte Betriebskosten, damit auch erhöhte Produktkosten und entsprechende Produktionsverluste.

Bei der Teigbildung müssen verschiedene Rohmaterialien miteinander vermischt werden. Mischvorrichtungen sind aus dem Stand der Technik bekannt. So beschreibt die EP 0 264 665 eine Mischvorrichtung, bei der eine Trommel eine Mischkammer umfaßt, welche mit zwei parallel verlaufenden, getrennten Entladekammern verbunden ist. Eine der Entladekammern weist eine radiale Entladeöffnung auf. An einem Ende der Trommel, welche entgegengesetzt einem Materialeinführschacht angeordnet ist, befindet sich eine querschnittsmäßig vergrößerte, mit den Entladekammern in Verbindung stehende Endkammer. Das Volumen der Endkammer ist derart in Bezug zu der Förderkapazität der Entladekammern dimensioniert, daß sie beim Betrieb der Vorrichtung im wesentlichen Atmosphärendruck ausgesetzt ist.

Zwei parallele Mischwellen erstrecken sich zumindest ab dem Materialeinführschacht sowohl durch die Mischkammer als auch jeweils durch eine Entladekammer bis zumindest zur Endkammer. Beide Wellen werden mit gleicher Drehgeschwindigkeit und Drehrichtung angetrieben, und an jeder der Wellen sind Mischmittel angeordnet.

An den Wellen sind in der Endkammer radial ausgerichtete Paddelteile vorhanden, welche so geformt sind, daß sie sich gegenseitig und die Endkammer säubern.

Die Wellen weisen schraubenförmige Rippen auf, um Material vom Materialeinführschacht über die Mischkammer durch jeweils eine der Entladekammern zu der Endkammer bzw. zur radialen Entladeöffnung zu transportieren. Weiter sind schraubenförmige Rippen an der Welle, welche in der die radiale Entladeöffnung aufweisenden Entladekammer angeordnet ist, so vorgesehen, daß Material von der Endkammer ebenfalls zur radialen Entladeöffnung transportiert wird.

Die Vorrichtung ist insbesondere zum Mischen für kritische Materialien ausgelegt, wie z.B. Hochenergiekraftstoffe, die möglicherweise explosiv sind. Zum Mischen von Rohmaterialien für Teigwaren ist diese Vorrichtung ungeeignet.

### Darstellung der Erfindung

Der Erfindung wurde nun die Aufgabe gestellt, insbesondere für die Herstellung von Teigwarenteig, die geschilderten Nachteile zu beheben, eine wirtschaftlichere Betriebsführung zu ermöglichen bei gleichzeitiger Aufrechterhaltung eines möglichst guten Klebergerüstes in dem hergestellten Teig.

Zur Lösung dieser Aufgabe sieht die Erfindung vor, daß das Rohmaterial kurzzeitig, auf einen Wassergehalt von 25 - 40 % aufgefeuchtet und in einem homogenfeuchten, krümelartiglosen Zustand direkt in eine Knet- und Wirkstufe geführt und in weniger als 60 Sekunden, vorzugsweise weniger als 30 Sekunden pressformdruckfrei zu einem Trockenteig geknetet wird, und dabei das Klebergerüst in eiem kontinuierlichen Durchlaufverfahren gebildet und anschließend unter Pressdruck der Teig homogenisiert und in die gewünschte Form gepreßt wird.

Alle beteiligten Fachleute, die die vielen seit Jahrzehnten gescheiterten Versuche gekannt oder sich daran beteiligten, waren wirklich überrascht, daß gemäß der neuen Erfindung ein Krümelteig mit einem ausgezeichneten Klebergerüst hergestellt werden kann, wofür z.B. insgesamt weniger als 1 Minute, benötigt wird, also nahezu keine Verweilzeit in dem gewohnten Sinne. Wie dies in der Folge noch gezeigt wird, ist es mit besonders vorteilhaften Ausgestaltungen selbst möglich, eine Teigware hoher Qualität vom Rohmaterial bis zum frisch gepresstem Zustand der Ware in dem Bereich von 20-30 Sekunden herzustellen, was in jeder Beziehung einen wesentlichen technischen Fortschritt für die Teigwarenherstellung bedeuten wird, ganz besonders im Hinblick auf die Hygiene. Mit Sicherheit kann mit den neuen Erkenntnissen gefolgert werden, dass die bisherigen Teigbildungsmodellvorstellungen für Teigwarenteige zumindest unvollständig und sehr unpräzise waren.

Bei der Herstellung von Nassteigen war es schon bekannt, dass das Klebergerüst im Bereich von 10-30 Sekunden aufgebaut werden kann, was aber wegen der im Ueberschuss vorhandenem Wasser vorstellbar war. Nicht so jedoch bei den Trockenteigen. Aufgrund der neuen Erfindung wird nun gefolgert, dass für die Bildung des Klebegerüstes in einem Trockenteig die Biologie nur insoferne eine Rolle spielt, als die Lebensvorgänge in den beteiligten Rohstoffen qualitativ nicht beeinträchtigt werden dürfen. Der Aufbau eines optimalen Klebegerüstes ist innerhalb dieser Grenzen nur ein chemisch-physikalischer Vorgang. Beide Vorgänge, sofern sie beherrscht werden, laufen im Bereich von Sekunden ab. Der chemische Prozess läuft aber nur dann im Sekundentempo ab, wenn entsprechend optimale Bedingungen für die Neuschaffungen von Bindungen hergestellt werden, insbesondere für die Schwefel- und Wasserstoffgruppen. Die physikalischen Vorgänge sind die Voraussetzung für die neuen chemischen Bindungen. Wenn die physikalischen Vorgänge, d.h. die Bewegungen der Teile innerhalb der Teigmasse nur genügend rasch vor sich gehen, brauchen die chemischen Bindungsvorgänge nahezu keine Zeit.

Die bisherige Vorstellung, dass die Wasserverteilung und die Wasseraufnahme durch die Proteinkörper Zeit braucht, ist aus dem Blickwinkel der neuen Erfindung falsch. Die Kernfrage ist nicht die Aufnahme 12 bis 20% Wasser, etwa über Kapilaren usw., und das Eindringen in die Mehl-oder Griesspartikel und in die Eiweisskörper, sondern nur, wie rasch das Wasser an alle Mehl- oder Griesspartikel verteilt werden kann, was bekanntlich umso schwieriger ist, je kleiner die zugegebene Wassermenge ist. Damit aber erweist sich der neue Gedanke der raschen und gleichmässigen Anfeuchtung der Mehle oder Griesse vorzugsweise in sogenannten Durchlauf-Wirbelbefeuchtern, mit keiner eigentlichen Verweil- bzw. Wirkzeit, dem Vorstellungsmodell des Trogmischers als weit überlegen. Für die geforderte Bildung von homogenfeuchten losen Krümeln aus den Mehl- oder Griessteilchen genügt ein blosses Anhaften des Wassers an den Mehl- oder GriessTeilchenoberflächen. Für das blosse Anhaften von Wasser an die einzelnen Gutpartikel ist ein kontinuierliches Durchlaufsystem dem Trog sichtlich überlegen. Möglicherweise in Anlehnung an den Verlauf der jüngsten Entwicklung der Brotteigherstellung blieb der grosse Mischtrog auch für die Trockenteigherstellung in der Fachwelt akzeptiert, in Kenntnis der damit verbundenen Nachteile, speziell für die Teigwarenindustrie.

Die neue Erfindung hilft aber völlig unerwartet noch zwei weitere bisherige Problemkreise zu entschärfen. Der eine betrifft die Inhomogenität des Endproduktes, der zweite, der teilweise dadurch mitbeeinflusst wird, ist der gleichmässige Austritt der Teigstränge aus der Pressform. Nach dem neuen Gedanken wird das Proteingerüst vorgängig des für die definitive Formbildung benötigten grossen Pressdruck aufgebaut.

Die für die Formbildung benötigte Pressschnecke braucht nun lediglich Homogenität des Trockenteiges zu erhalten und den erforderlichen Druck aufzubauen. Damit aber weist die Ware, die bei der Pressform austritt, eine nahezu einheitliche Temperatur auf, so dass auch die Austrittsgeschwindigkeit nun über den ganzen Pressformquerschnitt wesentlich konstanter ist. Entsprechend können die Schneidabfälle wegen ungleichlanger Ware, z.B. bei Spaghetti, stark vermindert werden.

Die Erfindung betrifft ferner eine Anzahl ganz besonders vorteilhafter Ausgestaltungen:
Bevorzugt ist, das Klebergerüst in dem Trockenteig in einem 2-Wellen-Kneter mit zwei selbstreinigenden, gleichlaufenden Wellen während weniger als 60, vorzugsweise weniger als 30 Sekunden durch Kneten und Wirken gebildet. Das erlaubt für die bauliche Verwirklichung der neuen Erfindung einen wesentlichen Schritt, indem anstelle des bisherigen reinigungsintensiven Mischtroges, eine selbstreinigende Einrichtung verwendbar ist. Damit fallen nicht nur die entsprechenden Aufwendungen weg, sondern es ist auch der hygienisch meist problematische Teil der bisherigen Verfahrensführung eliminiert.

Ganz besonders bevorzugt wird für die Bildung des Klebergerüstes das Gut durch mit-umlaufenden Schneid-/Knetwerkzeugen in einem Schneid-Knet-Prozess, gewirkt, wobei das Gut in der zweiten Stufe zeitlich wenigstens während 25% der gesamten Länge, vorzugsweise während 30-50% einem Schneid-/Knet- und Wirkprozess unterworfen wird.

Eine vorteilhafte Weiterbildung des erfindungsgemäßen Verfahrens besteht darin, daS die Wirk- und Knetintensität durch Regeln der Drehzahl verändert und beeinflußt werden kann, bevorzugt in Funktion der Stromaufnahme des Antriebsmotores.

Das Aufgliedern des Verfahrens in mehrere, einzeln kontrollierbare Stufen, ermöglicht ferner verschiedene weitere Vorteile.

So kann die Temperatur des Teiges vorzugsweise am Ende der zweiten Verfahrensstufe gemessen und durch Hinzufügen von entsprechend temperiertem Wasser bei der Anfeuchtung auf einen vorgewählten Wert geregelt und die Wirkund Knetintensität durch Regeln der Drehzahl verändert und beeinflusst werden.

Es kann aber auch nach jeder Stufe, insbesondere vor und nach der Teigbildung selbst, Produktproben entnommen, und sie direkt oder durch das Labor, überprüft werden, entsprechend lassen sich auch spezifische Korrektureingriffe während der Verarbeitung machen.

Die Produktübergabe von der ersten in die zweite, und von der zweiten in die nachfolgende Stufe erfolgen bevorzugt drucklos, bevorzugt durch die Schwerkraft, was die Musterentnahme und die Kontrolle bzw. die eigentliche Beherrschbarkeit des Verfahrensablaufes zusätzlich erleichtert.

Bevorzugt werden die Rohmaterialien in einem Wirbelmischer und einem mit wenigstens 250 U/Min. umlaufenden Mischrotor aufgefeuchtet.

Die neue Erfindung erlaubt aber auch für die Herstellung von Teigwaren mit unterschiedlichen festen oder dickflüssigen Zusätzen wie Tomaten, Spinat, Peperoni usw., diese in die zweite Stufe oder direkt in eine anschliessende 3. Stufe einzuspeisen.

Für die Herstellung der besonders im Vordergrund stehenden klassischen ungekochten Teigwaren wie Spaghetti, Nudeln, Makaroni usw wird vorgesehen, den Krümelteig direkt in eine Pressschnecke zu speisen, mit dem erforderlichen Druckaufbau durch eine Pressform in die definitive Form zu pressen und anschliessend die Ware zu trocknen. Selbstverständlich ist es möglich, die frisch gepressten Teigwaren, z.B. durch Dämpfen, zumindest in eine teil- oder vollständig gekochte Ware, Instantware usw. überzuführen, und dann den Trockenprozess durchzuführen.

Im Sinne einer weiteren Steigerung der Hygiene kann das Wasser als eine erste Flüssigkeitskomponente beim Einlauf in den Wirbelmischer und ein weiterer flüssiger Zusatz, z.B. Flüssigei, als eine zweite Flüssigkeitskomponente, direkt in die zweite Stufe gespiesen werden.

Vorteilhafterweise wird die gesamte Menge der Flüssigkeitskomponenten direkt in den Kneter ohne Vormischung mit dem Rohkneten eingespiesen.

Die Erfindung betrifft ferner eine Anlage zur Herstellung von Teig, insbesondere Teigwaren, die für einen anschliessenden Kochprozess vorgesehen sind. Diese ist dadurch gekennzeichnet, dass sie einen 2-Wellen-Kneter mit zwei gleichlaufenden, selbstreinigenden Wellen aufweist. Gleichlaufende Wellen weisen gegenüber gegenlaufenden Wellen Vorteile auf. Ueberraschende Vorteile haben sich insbesondere für die Frage der Qualität des Teiges ergeben, wenn für die Bildung des Krümelteiges ein 2-Wellenkneter und für den Aufbau des Pressdruckes eine Ein-Wellen-Pressschnecke verwendet wird.

Ganz besonders bevorzugt weist die Anlage zur Herstellung von Teigwaren, Elemente zum Dosieren aller Flüssigwie der Trockenkomponenten, eine Mischeinheit, eine gesonderte Kneteinheit, eine Presse sowie einen Trockner auf, so dass sie bevorzugt für die Teigbildung, bzw. die Herstellung frisch gepresster Ware, drei getrennt angetriebene Aggregate, einen ersten Wirbelmischer, einen 2-Wellen-Kneter sowie eine Press- und Formschnecke aufweist. Auf diese Weise ist es möglich wirtschaftlich, insbesondere bei Einhaltung hoher hygienischer Forderung, eine sehr gute Teigwarenqualität zu erzielen, wobei in jeder Stufe der Prozess für sich kontrollierbar ist, und leichter als bis zum Zeitpunkt der Anmeldung, Korrekturen vorgenommen werden können.

Die Erfindung betrifft eine Vorrichtung zur Herstellung von Trockenteig mit einem gut ausgebildeten Kleberproteingerüst, welches dadurch gekennzeichnet ist, dass sie einen vorzugsweise selbstreinigenden 2-Wellen-Kneter aufweist mit zwei gleichlaufenden Wellen, mit umlaufenden Schneidknetwerkzeugen sowie Einzugsschneckenelement.

### Unsere Beschreibung der Erfindung

Die Erfindung wird nun anhand einiger Ausführungsbeispiele mit weiteren Einzelheiten erläutert. Dabei zeigt die
- Fig. 1: die Teigbereitung für die Herstellung von Teigwaren;
- Fig. 2: die Knet- und Wirkeinrichtung der Fig. 1 in grösserem Massstab bei Ein- und Austritt des Gutes mittels Schwerkraft;
- Fig. 3: eine Variante zu Fig. 2 und Direktübergabe von der Knetstufe in die Formpressschnecke;
- Fig. 4: schematisch den Verfahrensablauf von den Rohmaterialien bis zu frisch gepressten Kurzwaren;
- Fig. 5: eine komplette Teigwarenlinie für Kurzwaren;
- Fig. 6: eine komplette Teigwarenlinie für Langwaren;

### Wege zur Ausführung der Erfindung

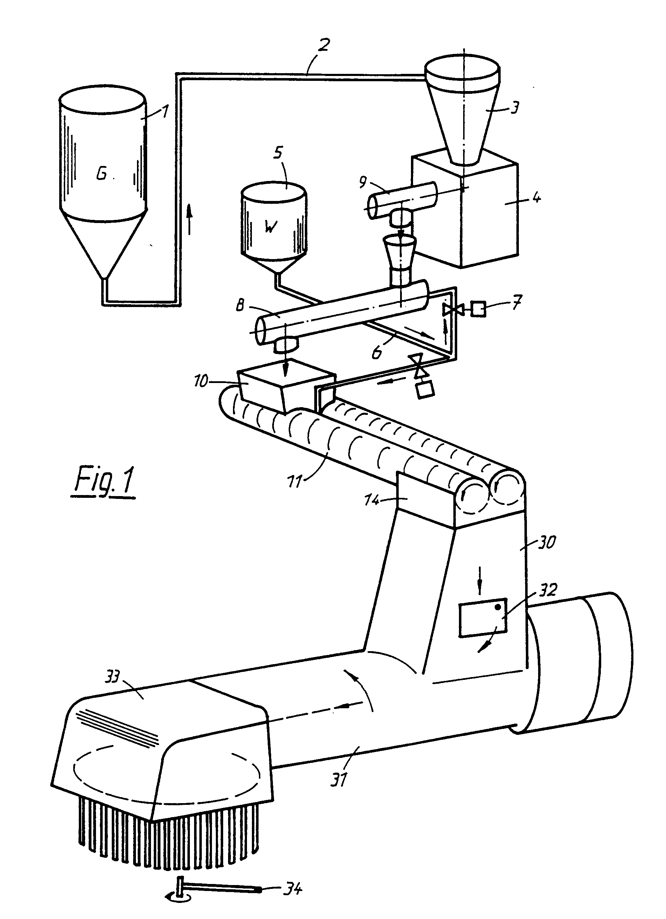

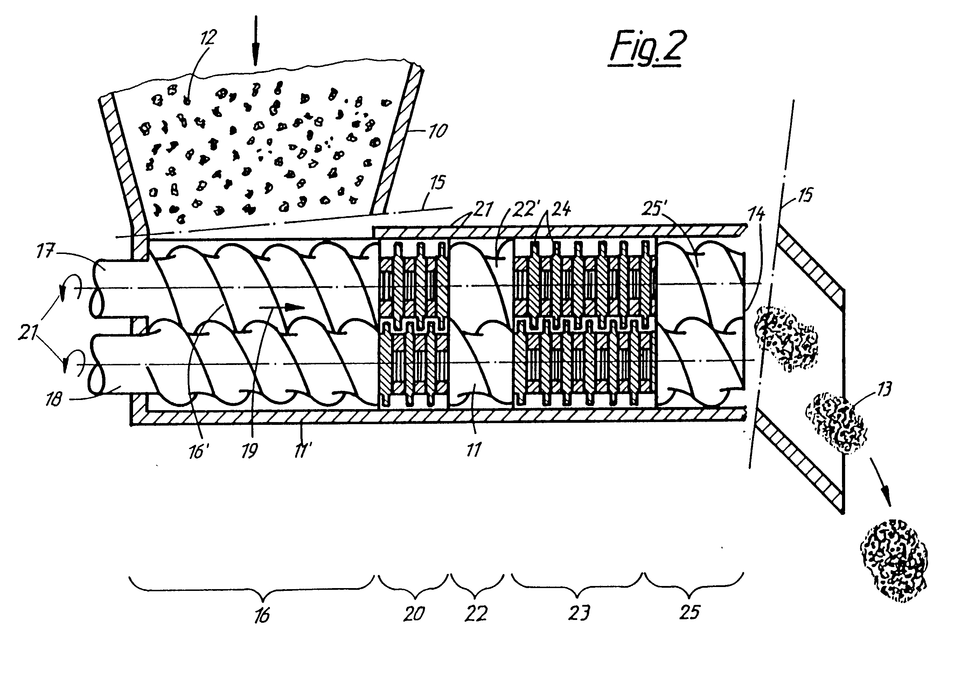

In der Folge wird nun auf die Fig. 1 und 2 bezug genommen. Das Rohmaterial wird in der Form von Griesen einem Silo 1 entnommen und über eine pneumatische Transportleitung 2 in einen Vorbehälter 3 und direkt in die Dosiervorrichtung 4 gespiesen. Wasser wird von einem Tank 5 über eine Leitung 6 und einen Mengenregler 7 direkt in einen Wirbelmischer 8 dosiert. Von der Dosiereinrichtung 4 wird dem trockenen Rohmaterial über einen Speisekopf 9 gleichmässig in den Wirbelmischer 8 abgegeben. Zu dem Wirbelmischer 8 wird das trockene Rohmaterial gleichmässig angefeuchtet und das dabei sich bildende krümelartig lose Gut (Fig. 2) in einen Einlauf 10 eines Kneters 11 geleitet. Der Kneter 11 bildet aus losen Krümeln 12 (siehe Fig. 2) durch die Knetung und Wirkung einen Krümelteig 13. Der Krümelteig dabei, wenn das Austritts-Ende 14 des Kneters 11 völlig frei ist, aus Teigstückchen von z.B. 1-5cm Grösse, teils fast handgrossen Stücken, und macht einen bröckeligen, zerbrockelnden Eindruck, so ähnlich wie das Innere eines gebackenen Brotes. Wird aber das Austrittsende düsenartig verengt, so bildet sich eine "Wurst" von ähnlicher Beschaffenheit, jedoch als eine endlose Extrusionsform. In beiden Fällen hat jedoch der Krümelteig noch nicht die Beschaffenheit eines kompakten Teiges. Zerreist man nämlich ein Stück des Krümelteiges, so stellt man leicht die eigentliche Teigbeschaffenheit durch die plastischelastische und nicht klebrige Eigenschaft fest. Eine mikroskopische Untersuchung zeigt, dass der Krümelteig 13 tatsächlich schon die volle Ausbildung des Proteingerüstes hat. Weil es sich aber um einen Trockenteig handelt, und der eigentliche Formpressdruck von z.B. 50-100 und mehr bar. noch nicht aufgewendet wurde, gibt es nur scheinbar den Eindruck eines leicht brüchigen Teiges.

Die Krümelteigbildung geht nun wie folgt vor: Die losen, eine gleichmässige Feuchtigkeit aufweisenden Krümel 12 werden durch den Einlauf in einen 2-Kneter 11 gespiesen. Für ein leichteres Verständnis ist in der Fig. 2 der eigentliche Kneterkörper 11′ in der bevorzugten horizontalen Lage, also in Draufsicht dargestellt. Der Einlauf 10 sowie das Austrittsende sind dagegen von der Seite, also in aufrechter Lage gezeichnet. Mit anderen Worten ist der Kneterkörper um 90° in die aufrechte Bildebene gekippt dargestellt, was mit den Bildschnittlinien 15 angezeigt ist. Die Krümel 12 werden durch Einzugs-Schnecken 16′ resp. Einzugszone 16 von zwei Arbeitswellen 17 resp. 18 erfasst und nach rechts, gemäss Pfeil 19, in eine erste Knetzone 20 gefördert.

In der Knetzone 20 sind auf jeder Arbeitswelle 17 resp. 18 je 3 Paar mit umlaufenden Knetfinger 21 angeordnet. Beide Arbeitswellen 17 resp. 18 drehen in der gleichen Richtung (Pfeil 21) und kämmen ähnlich wie zwei Schnecken-Zahnräder ineinander. Dadurch entsteht ein zweifacher Effekt: eine Förderung des Gutes (Pfeil 19) und eine Verdichtung, dabei wird eine dichte Masse gebildet. Diese Masse wird nun in der ersten eigentlichen Knetzone durch die Knetfinger 21 vorgeknetet und gewirkt.

Auch die Knetfinger 21 können so gestaltet werden, dass sie eine leichte Stau- und doch Förderwirkung ergeben. Die die Knetzone 20 verlassende Masse wird durch eine Zwischenförderzone 22 in eine zweite Knetzone 23 ebenfalls mit positiver Zwangsförderung durch die Schneckenelemente 22′ gepresst. In der Knetzone 23 findet nun die Hauptwirkung und Knetung der Teigmasse und entsprechend die Ausbildung des Proteingerüstes statt. Dabei können in der Knetzone 23 ähnliche oder auch andere Knetelemente, teils abwechselnd, verwendet werden. Insgesamt findet die Einwirkung der mechanischen Druck- und Förderkräfte ganz gezielt an verhältnismässig sehr kleinen Teigportionen statt, so dass nahezu keine unnötigen Druckkräfte und Reibeffekte entstehen. Dies ist der Grund, weshalb nur eine geringe Erhöhung der Temperatur stattfindet, verglichen mit älteren Kneteinrichtungen. Am Ende der Knetzone 23 wird die Teigmasse einer Ausstossschnecke 25′ resp. durch eine entsprechende Ausstosszone 25 geführt und über das Austrittsende 14 der weiteren Verarbeitung zugeführt. Der gezeigte 2-Wellen-Kneter hat den besonderen Vorteil, dass er zu einem sehr hohen Grad selbstreinigend arbeitet. Der Ausstoss des Teiges kann je nach Ausbildung des Austrittsendes als Teigstückchen oder mit leichter Verengung und entsprechendem Druckaufbau als Strang ähnlich erfolgen.

In der Fig. 1 wird der Krümelteig 13 einem Fallschacht 30 direkt in eine Pressschnecke 31 durch Schwerkraft übergeben, wobei Teigmuster über eine Kontrolltüre 32 entnommen werden können.

Der Fallschacht kann aber auch zusätzliche Kontrollmittel aufweisen, resp. direkt an solche angeschlossen werden, z.B. zur Ueberwachung der Temperatur. Damit lässt sich sehr gut jede Verfahrensstufe einzeln überwachen, und es kann sofort gezielt eingegriffen werden. Am Ende der Pressschnecke 31 der Fig. 1 befindet sich ein Presskopf 33 mit entsprechender Form. Symbolisch ist ein rotierendes Schneidmesser 34 dargestellt, z.B. für die Herstellung von Kurzwaren wie Hörnli.

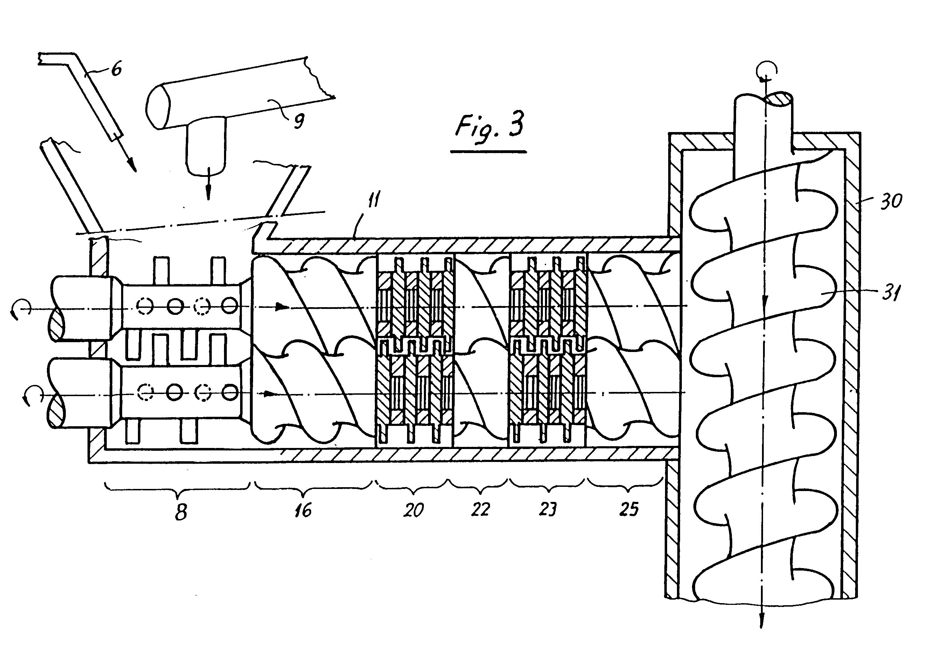

In der Fig. 3 ist eine Variante zu der Fig. 2 dargestellt. Dabei sind die einzelnen arbeitszonen ähnlich wie in Fig. 2 gestaltet, wobei selbstverständlich eine sehr grosse Vielfalt für die ausgestaltung, insbesondere der Knet- und Wirkelemente offen ist wie Lochscheiben, von aussen nach innen gerichtete Widerstandskörper, Stifte usw. Die Fig. 3 ist im Grundriss gezeichnet.

Wesentlich ist hier die Direktübergabe des Krümelteiges 13 in die Folgeschnecke 30, welche eine reine Förderfunktion haben kann, oder wie in der Fig. 1 schon die eigentliche Pressschnecke 31 sein kann. Wichtig ist dabei aber, dass die Folgeschnecke 31 eine grössere Förderleistung aufweist als der Kneter 11, sodass ein unkontrollierbarer Druckaufbau für den Kneter vermieden wird, und damit auch die Gefahr des unkontrollierten Temperaturanstieges vermieden wird. Die Uebergabe des Krümelteiges von dem Kneter 11 an die Folgeschnecke erfolgt dadurch, dass die Förderschnecke 31 den eintretenden Teigguss abschneidet.

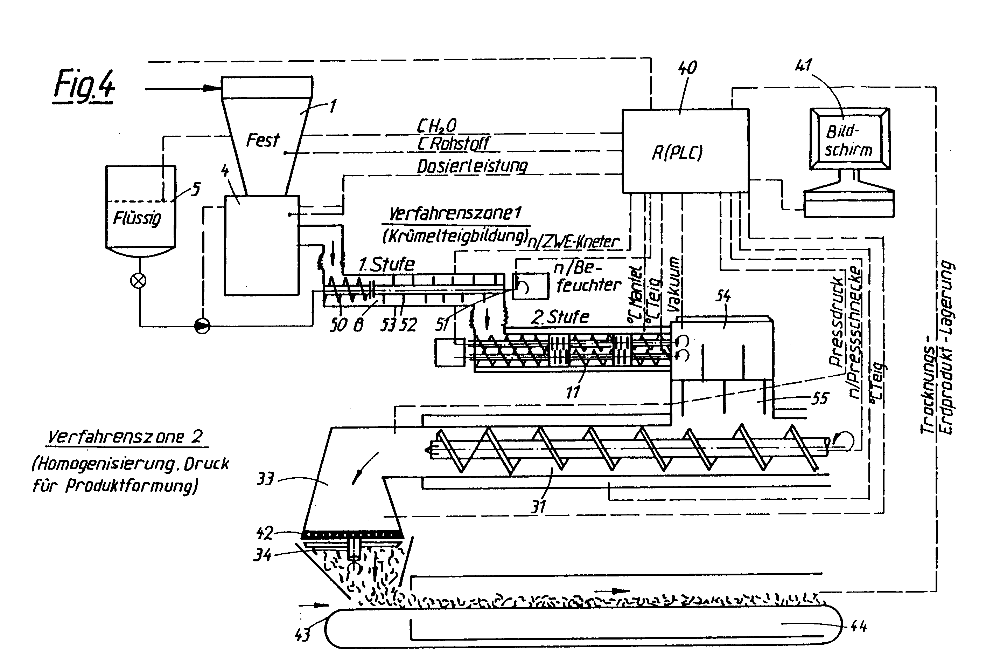

In Fig. 4 zeigt die neue Erfindung weitere Anlageelemente, welche ein Rechner 40 mit Bildschirm 41 aufweist.

Auch hier wird die Herstellung von kurzen Teigwaren dargestellt, wobei die Teigmasse über einen Presskopf 33 und eine Form 42 in Teigwaren gepresst wird. Das geschnittene Gut fällt direkt auf ein Förderband 43, welches direkt in einen Trockner oder Dämpfer 44 geführt wird In der Fig. 4 kommt auch gut die stufen- resp. zonenweise Behandlung zum Ausdruck, wobei in einer ersten Verfahrenszone der Krümelteig hergestellt wird, und in einer zweiten Verfahrenszone der Krümelteig durch eine Pressschnecke 31 mit hohen Druck von 50-100 und mehr bar zu einer kompakten homogenen Teigmasse verarbeitet und dann geformt wird.

Der gezeigte Wirbelmischer 8 hat eine Einzugsschnecke 50, welche auf einer Welle 51 mit einer Drehzahl von vorzugsweise 200-500 Umdrehungen pro Minute umläuft. Die eigentliche Netzung und Krümelbildung findet aber in dem an die Einzugsschnecke 50 anschliessenden runden Gehäuse 53 statt, und wird durch eine grössere Zahl mit umlaufenden Wirbelelemente 52 erzeugt. Dem Wirbelmischer 8 wird somit der Feststoff ohne eigentliche Pressung des trockenen Rohmaterial eingespiesen. Ebenso verlassen die Krümel ohne Pressdruck den Wirbelmischer 8, indem diese im freien Fall direkt in den Kneter 11 geführt werden. In Fig. 4 ist der Kneter 11 gleich wie in Fig. 2 mit zwei übereinander angeordneten Kneterwellen dargestellt. In der Praxis gibt es jedoch in der Mehrzahl der Fälle mehr Vorteile, wenn die beiden Kneterwellen 21 horizontal oder höchstens nur leicht in die Höhe versetzt werden. Die den Kneter verlassenden Krümel 13 treten frei in einen Vakuumraum 54. Hier zeigen sich nun für eine Anzahl praktischer Anwendungen ganz besonders die grossen Vorteile der neuen Erfindung, denn bei der Luftentnahme aus einem frei durch den Vakuumraum 54 fallen verhältnismässig poröse, zumindest noch nicht kompakte Krümelteig, was sehr effizient ist. Für die sichere Uebergabe und gleichzeitig zur Unterstützung der Entlüftung, kann in dem Vakuumraum 54 ein bewegter Haspel 55 angeordnet werden. Durch entsprechende on-line Messgeräte können alle wesentlichen Parameter (Temperatur, Feuchtigkeit, Klima, Druck usw) erfasst und über eine Steueranlage 40 optimal gehalten werden.

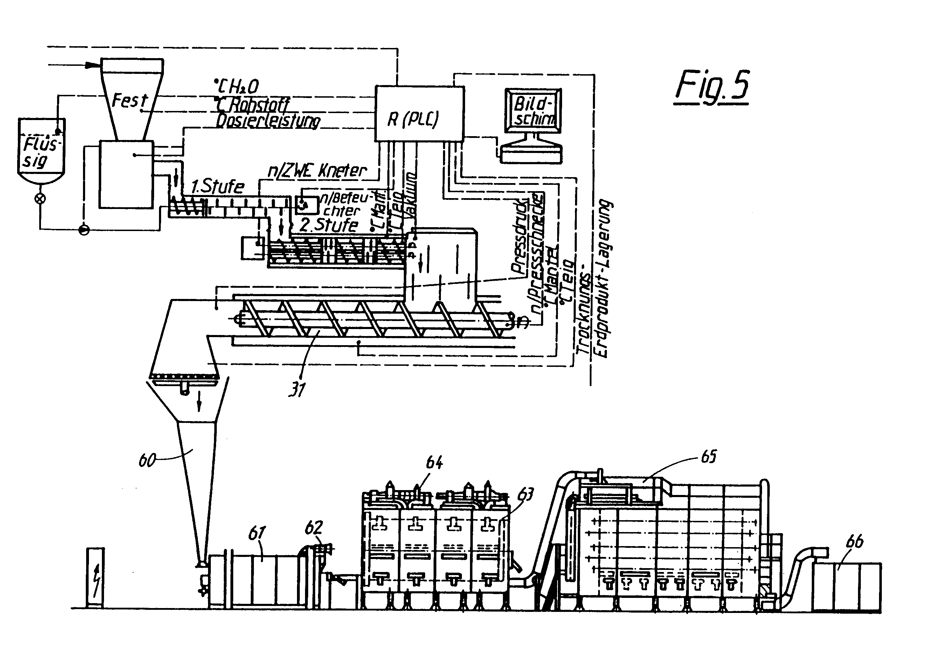

In Fig. 5 ist die Lösung gemäss Fig. 4 in Kombination mit einer ganzen Teigwarenlinie dargestellt. Die Kurzwaren werden über einen Fallschacht 60 direkt in einen ersten Schüttelvortrockner 61 zur Formverfestigung der Teigwarenteile, geführt.

Der Schütteltrockner 61 ist meistens mit einer einfachen Lüftung bzw. Klimaanlage 62 ausgerüstet. Die Haupttrocknung findet hier in einem rotierenden Trockner 63, dem sogenannten Rotante 63, mit einer sehr intensiven Luft-und Klimaeinrichtung 64, statt. Die Ware wird anschliessend zur Fertigtrocknung und Formstabilisierung im Endtrockner 65 und anschliessend direkt einer Kühlzone 66 und anschliessend einer Verpackungseinrichtung übergeben.

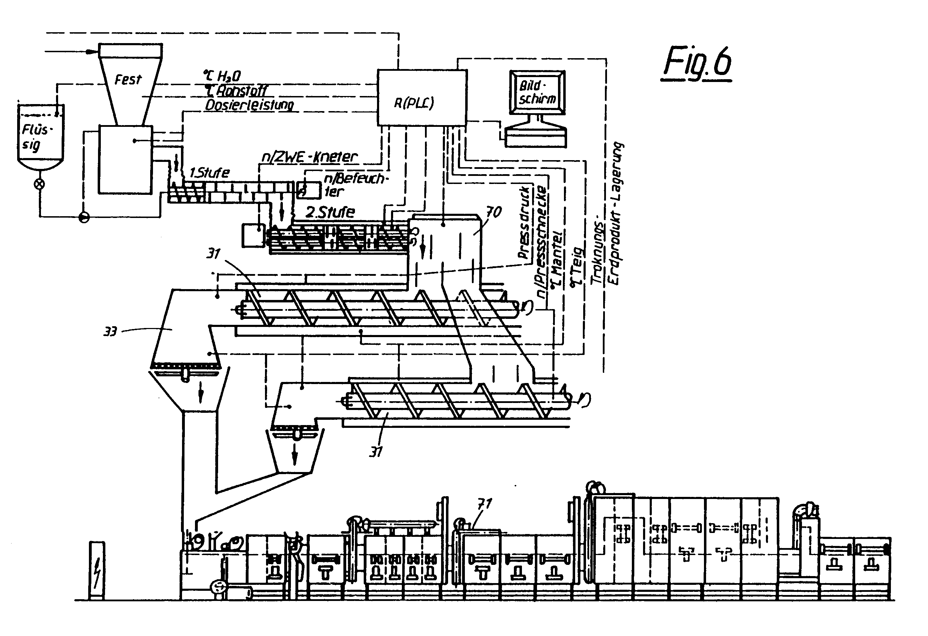

Die Fig. 6 zeigt eine weitere vorteilhafte Ausgestaltung. Dabei werden anstelle von einer einzigen Pressschnecke 31 deren zwei verwendet. Der Krümelteig wird mittels einer Verteilvorrichtung 70, die ebenfalls an eine Vakuumpumpe anschliessbar ist, gleichmässig an beide Pressschnecken 31, übergeben. Dabei kann die jeweilige Zuspeisung zu den einzelnen Pressschnecken, insbesondere neu mehr als 2 und z.B. aufgrund der Motorleistungsaufnahme des Druckes im Presskopf 33, gesteuert werden.

Die Fig. 6 zeigt eine typische Trocknungslinie 71 für Langwaren mit sehr grosser Leistung.

## Patentansprüche

1. Verfahren zur Herstellung von Teig, insbesondere Teigwarenteig aus stärke- und klebereiweisshaltigen Rohmaterialien, wie Mehl, Dunst oder Griess mittels Befeuchten, Mischen und Kneten, bei dem das Gut eine Temperatur von 50°C nicht übersteigt und das Klebergerüst voll ausgebildet wird,
dadurch **gekennzeichnet,**
daß das Rohmaterial kurzzeitig, auf einen Wassergehalt von 25 - 40% aufgefeuchtet und in einem homogenfeuchten krümelartig losen Zustand direkt in eine Knet- und Wirkstufe geführt und in weniger als 60 Sekunden, vorzugsweise weniger als 30 Sekunden pressformdruckfrei zu einem Trockenteig geknetet wird, und dabei das Klebergerüst in einem kontinuierlichen Durchlaufverfahren gebildet und anschließend unter Pressdruck der Teig homogenisiert und in die gewünschte Form gepreßt wird.

2. Verfahren nach Patentanspruch 1,
**dadurch gekennzeichnet,**
dass das das Klebergerüst in dem Trockenteig in einen 2-Wellen-Kneter mit zwei selbstreinigenden und zwangsfördernden gleichlaufenden Wellen während weniger 40, vorzugsweise weniger als 20 Sekunden gebildet wird.

3. Verfahren nach Patentanspruch 2,
**dadurch gekennzeichnet**,
dass für die Bildung des Klebergerüstes das Gut durch mitumlaufenden Schneid-/Knetwerkzeugen einem Schneid-/Knetprozess unterworfen wird.

4. Verfahren nach einem der Patentansprüche 1-2 ,
**dadurch gekennzeichnet**,
dass das Gut stufenweise bearbeitet in einer zweiten Stufe zeitlich wenigstens während 10% der gesamten-Länge, vorzugsweise während 30-50% einen Schneid/-Knetprozess unterworfen wird.

5. Verfahren nach einem der Patentansprüche 1-4,
**dadurch gekennzeichnet**,
dass die Wirk- und Knetintensität durch Regeln der Drehzahl verändert und beeinflusst werden kann, bevorzugt in Funktion der Stromaufnahme des Antriebsmotores.

6. Verfahren nach einem der Patentansprüche 1-4,
**dadurch gekennzeichnet**,
dass die Temperatur des Teiges vorzugsweise am Ende der zweiten Stufe gemessen und durch Hinzufügen von entsprechend temperiertem Wasser bei der Anfeuchtung auf einen vorgewählten Wert geregelt wird.

7. Verfahren nach einem der Patentansprüche 1-6,
**dadurch gekennzeichnet**,
dass die Produktübergabe von der ersten in die zweite, und von der zweiten in die nachfolgende Stufe drucklos, bevorzugt durch die Schwerkraft erfolgt.

8. Verfahren nach einem der Patentansprüche 1-7,
**dadurch gekennzeichnet**,
dass die Rohmaterialien in einem Wirbelmischer und einem mit wenigstens 250 U/Min. umlaufenden Mischrotor, aufgefeuchtet werden.

9. Verfahren nach einem der Patentansprüche 1-8,
**dadurch gekennzeichnet**,
dass Wasser als eine Flüssigkeitskomponente beim Einlauf in den Wirbelmischer und weitere Flüssigkeitskomponenten, z.B. Flüssigei direkt in die zweite Stufe gespiesen wird.

10. Verfahren nach einem der Patentansprüche 1-9,
**dadurch gekennzeichnet**,
dass die gesamte Menge der Flüssigkeitskomponenten direkt in den Kneter ohne Vormischung mit dem Rohkneten eingespiesen wird.

11. Verfahren nach einem der Patentansprüche 1-10,
**dadurch gekennzeichnet**,
dass feste oder dickflüssige Zusätze wie Tomaten, Spinat, Peperoni usw. in die zweite Stufe oder direkt in eine anschliessende 3. Stufe gespiesen wird.

12. Verfahren zur Herstellung von Teigwaren nach einem der Patentansprüche 1-11,
**dadurch gekennzeichnet**,
dass der Trockenteig direkt in eine oder mehrere Pressschnecken gespiesen und mit dem erforderlichen Druckaufbau durch eine Pressform in die definitive Form gepresst und anschliessend die Ware getrocknet wird.

13. Anlage zur Ausführung des Verfahrens nach einem der vorangehenden Ansprüche,
dadurch **gekennzeichnet**,
daß sie einen 2-Wellen-Kneter mit zwei gleichlaufenden, selbstreinigenden Wellen aufweist.

14. Anlage nach Anspruch 13,
dadurch **gekennzeichnet**,
daß sie für die Bildung des Krümelteiges einen 2-Wellen-Kneter, und für den Aufbau des Pressdruckes eine Ein-Wellen-Preßschnecke aufweist.

15. Anlage nach Anspruch 13 oder 14,
**dadurch gekennzeichnet**,
dass sie eine Dosiereinheit zum Dosieren aller Flüssig- wie Trockenkomponenten, eine Mischeinheit, eine gesonderte Kneteinheit, eine Presse sowie einen Trockner aufweist.

16. Anlage nach einem der Patentansprüche 13 bis 15,
**dadurch gekennzeichnet**,
dass sie für die Teigbildung drei getrennt angetriebene Aggregate, einen ersten Wirbelmischer, einen 2-Wellen-Kneter sowie eine Press- und Formschnecke aufweist.

17. Anlage nach Patentanspruch 13 bis 16,
**dadurch gekennzeichnet**,
dass sie einen selbstreinigenden 2-Wellen-Kneter aufweist mit zwei gleichlaufenden Wellen, mit mitumlaufenden Schneidknetwerkzeugen sowie Einzugsschneckenelementen.

## Claims

1. Process for the making of dough, in particular pasta dough, from starchy and glutinous protein containing raw materials such as flour, dust or semolina by means of moistening, mixing and kneading in which the material does not exceed a temperature of 50°C and the gluten framework is fully established,
characterised in that
the raw material is moistened up to a water content of 25-40% for a short time and is fed directly into a kneading and working stage in an homogeneously moist, crumbly, loose state and kneaded into dry dough without moulding pressure in less than 60 seconds, preferably in less than 30 seconds, the gluten framework being thereby formed in a continuous through-flow process and the dough being subsequently homogenised under pressing pressure and pressed into the desired form.

2. Process in accordance with patent claim 1,
characterised in that
the gluten framework in the dry dough is formed in less than 40, preferably less than 20 seconds in a twin-shafted kneader comprising two self-cleaning and force-feeding shafts which run in the same direction.

3. Process in accordance with patent claim 2,
characterised in that
the material is subject to a cutting/kneading process for the formation of the gluten framework by co-rotating cutting/kneading appliances.

4. Process in accordance with one of the patent claims 1-2,
characterised in that
the material is worked in a step-like manner in a second stage and is subject to a cutting/kneading process during at least 10% of the total length, preferably during 30-50%, with respect to time.

5. Process in accordance with one of the patent claims 1-4,
characterised in that
the working and kneading intensity can be changed and influenced by regulating the rotational speed, preferably as a function of the current take-up of the drive motor.

6. Process in accordance with one of the patent claims 1-4,
characterised in that
the temperature of the dough is measured preferably at the end of the second stage and is regulated to a pre-chosen value during the moistening by the addition of water at an appropriate temperature.

7. Process in accordance with one of the patent claims 1-6,
characterised in that
the product transfer from the first into the second and from the second into the following stage takes place without pressure, preferably by gravity.

8. Process in accordance with one of the patent claims 1-7,
characterised in that
the raw materials are moistened in a swirl mixer and in a mixing rotor rotating at at least 250 revs./min..

9. Process in accordance with one of the patent claims 1-8,
characterised in that
the water is fed in at the inlet as a liquid component and in that further liquid components, such as liquid egg, are fed directly into the second stage.

10. Process in accordance with one of the patent claims 1-9,
characterised in that
the entire amount of the liquid components are fed directly into the kneader without pre-mixing with the raw dough.

11. Process in accordance with one of the patent claims 1-10,
characterised in that
the solid or thick-liquid additives such as tomatoes, spinach, peperoni etc. are fed into the second stage or directly into an adjoining third stage.

12. Process for the making of pasta in accordance with one of the patent claims 1-11,
characterised in that
the dry dough is fed directly into one or more pressing screws and is pressed into the definite form, with the necessary pressure build-up, by a mould and in that the dough is subsequently dried.

13. Plant for performing the process in accordance with one of the preceding claims,
characterised in that
it has a twin-shafted kneader comprising two self-cleaning shafts which run in the same direction.

14. Plant in accordance with claim 13,
characterised in that
it has a twin-shafted kneader for the formation of the crumble and has a single-shafted pressing screw for the build-up of pressing pressure.

15. Plant in accordance with claim 13 or 14,
characterised in that
a dosing unit for the dosing of all fluid as well as dry components comprises a mixing unit, a separate kneading unit, a press and a drier.

16. Plant in accordance with one of the patent claims 13-15,
characterised in that
the three separately driven stages for the dough formation comprise a first swirl mixer, a twin-shafted kneader and a press screw and forming screw.

17. Plant in accordance with one of the patent claims 13-16,
characterised in that
it has a self-cleaning twin-shafted kneader comprising two shafts which run in the same direction, comprising co-rotating cutting/kneading appliances as well as in-feed screw elements.

## Revendications

1. Procédé de fabrication de pâtes, notamment pour pâtes alimentaires, à partir de matières premières contenant de l'amidon et du gluten, telles que de la farine ou de la semoule, par humidification, mélange et pétrissage, dans lequel le produit ne dépasse pas une température de 50°C et la structure agglutinante est entièrement développée, caractérisé en ce que la matière première est humidifiée sur une faible durée jusqu'à une teneur en eau de 25 à 40 %, et est amenée directement dans un étage de pétrissage et de malaxage dans un état en vrac grumeleux à humidité homogène et est pétrie en moins de 60 secondes, de préférence moins de 30 secondes, en l'absence de pression en une pâte sèche, la structure agglutinante étant alors formée en un procédé à traversée continue et la pâte est ensuite homogénéisée sous pression et comprimée sous la forme désirée.

2. Procédé selon la revendication 1, caractérisé en ce que la structure agglutinante est formée dans la pâte sèche pendant moins de 40 secondes, de préférence moins de 20 secondes, dans un malaxeur à deux arbres, doté de deux arbres synchrones autonettoyants et effectuant une alimentation forcée.

3. Procédé selon la revendication 2, caractérisé en ce que dans le but de former la structure agglutinante le produit est soumis à un processus de cisaillement/malaxage au moyen d'outils de cisaillement/malaxage en rotation conjointe.

4. Procédé selon l'une ou l'autre des revendications 1 et 2, caractérisé en ce que le produit est traité par étapes et est soumis au cours d'une seconde étape à un processus de cisaillement/malaxage pendant au moins 10 % du temps total, de préférence 30 à 50 %.

5. Procédé selon l'une quelconque des revendications 1 à 4, caractérisé en ce que l'intensité de pétrissage et de malaxage peut être modifiée et influencée par réglage de la vitesse de rotation, de préférence en fonction de l'appel de courant du moteur d'entraînement.

6. Procédé selon l'une quelconque des revendications 1 à 4, caractérisé en ce que la température de la pâte est mesurée, de préférence à la fin de la seconde étape, et régulée par addition d'eau tempérée de façon correspondante, lors de l'humidification à une valeur prédéterminée.

7. Procédé selon l'une quelconque des revendications 1 à 6, caractérisé en ce que le passage du produit du premier étage vers le second étage, et du second étage vers le suivant, s'effectue sans pression, de préférence à l'aide de la gravité.

8. Procédé selon l'une quelconque des revendications 1 à 7, caractérisé en ce que les matières premières sont humidifiées dans un mélangeur à turbulences et à rotor de mélange qui tourne à au moins 250 tpm.

9. Procédé selon l'une quelconque des revendications 1 à 8, caractérisé en ce que l'eau est alimentée en tant que l'une des composantes liquides à l'entrée du mélangeur à turbulences, et en ce que les autres composantes liquides, par exemple de l'oeuf liquide, sont alimentées directement dans le second étage.

10. Procédé selon l'une quelconque des revendications 1 à 9, caractérisé en ce que la quantité totale des composants liquides est alimentée directement dans le malaxeur sans mélange préalable avec le malaxage grossier.

11. Procédé selon l'une quelconque des revendications 1 à 10, caractérisé en ce que l'on ajoute des additifs solides ou visqueux, tels que tomates, épinards, pepperoni, etc.. dans le second étage ou directement dans un troisième étage successif.

12. Procédé selon l'une quelconque des revendications 1 à 11, caractérisé en ce que la pâte sèche est alimentée directement dans une ou plusieurs presses à vis et comprimée dans la forme définitive avec mise en pression nécessaire par l'intermédiaire d'un moule sous pression, et en ce que le produit est ensuite séché.

13. Installation pour mettre en oeuvre le procédé selon l'une quelconque des revendications précédentes, caractérisé en ce qu'elle comprend un malaxeur à deux arbres comprenant deux arbres synchrones et auto-nettoyants.

14. Installation selon la revendication 13, caractérisée en ce qu'elle comprend un malaxeur à deux arbres pour la formation de la pâte grumeleuse, et une presse à vis monoarbre pour réaliser la pression de formage.

15. Installation selon l'une ou l'autre des revendications 13 et 14, caractérisée en ce qu'elle comprend une unité de dosage pour le dosage de toutes les composantes liquides et sèches, une unité de mélange, une unité particulière de malaxage, une presse et un séchoir.

16. Installation selon l'une quelconque des revendications 13 à 15, caractérisée en ce qu'elle comprend trois ensembles entraînés de façon séparée pour la formation de la pâte, un premier mélangeur tourbillonnaire, un malaxeur à deux arbres, et une presse-mouleuse à vis.

17. Installation selon l'une quelconque des revendications 13 à 16, caractérisée en ce qu'elle comprend un malaxeur autonettoyant à deux arbres avec deux arbres synchrones, des outils de cisaillement/malaxage en rotation conjointe, et des unités d'entrée à vis.
